Europäisches Patentamt

European Patent Office

Office européen des brevets

(11) Veröffentlichungsnummer: **0 472 090 A2**

# (12) EUROPÄISCHE PATENTANMELDUNG

(21) Anmeldenummer: **91113547.3**

(22) Anmeldetag: **13.08.91**

(51) Int. Cl.5: **A01G 9/24**

(30) Priorität: **18.08.90 DE 4026194**

(43) Veröffentlichungstag der Anmeldung:
**26.02.92 Patentblatt 92/09**

(84) Benannte Vertragsstaaten:
**AT BE CH DK ES IT LI NL**

(71) Anmelder: **MAYER KG APPARATE- UND MASCHINENBAU**
**Poststrasse 30**
**W-7920 Heidenheim(DE)**

(72) Erfinder: **Lanz, Franz, Dipl.-Ing. (FH)**
**Lichtensteinstrasse 13**
**W-7909 Dornstadt(DE)**

(74) Vertreter: **Lorenz, Werner, Dipl.-Ing.**
**Fasanenstrasse 7**
**W-7920 Heidenheim(DE)**

(54) **Verfahren und Vorrichtung zum Giessen.**

(57) Bei einem Verfahren zum Gießen von einer Vielzahl von rasterartig angeordneten Topfpflanzen, erfolgt von einem taktweise verfahrbaren Gießwagen mit brückenartigem Aufbau über an dem Aufbau angeordnete Bewässerungsdüsen eine gezielte Bewässerung der Pflanzen. Durch an dem Aufbau (1,2,3) angebrachte Bohreinrichtungen (6) werden für die Topfpflanzen (17) rasterförmig Löcher (15) in das Erdreich gebohrt, wonach die Topfpflanzen (17) auf dem Aufbau (1,2,3) über die Bohrlöcher (15) transportiert, dort positioniert und definiert in die Bohrlöcher (15) abgesetzt werden.

Fig.3

Die Erfindung betrifft ein Verfahren und eine Vorrichtung zum Gießen von einer Vielzahl von rasterartig angeordneten Topfpflanzen, wobei ein taktweise verfahrbarer Gießwagen mit brückenartigem Aufbau über an dem Aufbau angeordnete Bewässerungsdüsen die Pflanzen gezielt wässert.

Zur Kultur und/oder zur Aufzucht von Pflanzen ist bereits bekannt, zur Einsparung von Wasser und zum gezielten und programmierten Gießen Gießwagen einzusetzen, die taktweise vorher entsprechend genau positionierte Topfpflanzen anfahren und dann bewässern.

Nachteilig dabei ist jedoch, daß die Topfpflanzen vorher exakt an der vorbestimmten Stelle positioniert sein müssen. Hierzu ist es bekannt, von Hand die in Übertöpfen angeordneten Topfpflanzen auf ein Gitter auf dem Boden ausgelegtes Gitter in Rasterform zu setzen und entsprechend der Rasterform wird dann der Gießwagen so gesteuert, daß jeweils bei einem Taktstop die Bewässerungsdüsen über den Topfpflanzen stehen, wonach die Bewässerung erfolgt. Anschließend wird um einen Takt weitergefahren.

Statt einem Gitter ist auch bekannt, Topfpflanzen in Steine mit Löchern rasterförmig abzusetzen. Das Anfahren der Topfpflanzen erfolgt dabei in gleicher Weise wie vorstehend beschrieben.

Neben dem erforderlichen Zeit- und Arbeitsaufwand zum Ausbringen der Topfpflanzen sind bei dieser Anlage auch hohe Investitionskosten erforderlich.

Bekannt sind auch bereits Bohrmaschinen, die nach einer vorgegebenen Linie (auf dem Wasserstrahl des herkömmlichen Gießwagens) eine Vielzahl von Löcher in das Erdreich bohren. In diese Löcher werden dann ebenfalls von Hand einzeln in die Topfpflanzen eingesetzt und nachgedrückt. Die Bewässerung erfolgt wiederum durch einen Gießwagen, der brückenartig aufgebaut ist und auf Schienen über das Erdreich verfährt.

Eine Anlage dieser Art ist zwar einfacher im Aufbau, denn eine Gitterstruktur und Übertöpfe können entfallen, aber nachteilig ist weiterhin, daß die Topfpflanzen von Hand ausgebracht werden müssen.

Ein weiterer Nachteil besteht darin, daß eine gezielte Bewässerung durch einen Gießwagen nicht möglich ist, denn mit der Lochbohrmaschine lassen sich die Löcher nicht so genau einbringen, bzw. läßt sich keine so exakte Zuordnung erreichen, als daß mit einem taktweise verfahrbarem Gießwagen eine gezielte Bewässerung möglich wird. Bei Verwendung von Lochbohrmaschinen kann deshalb über einen Gießwagen nur eine kontinuierliche Linienbewässerung erfolgen. Im Vergleich zu einer gezielten Bewässerung ist hierzu jedoch ein Mehrbedarf von 60 % und höher an Wasser und Dünger erforderlich.

Der vorliegenden Erfindung liegt daher die Aufgabe zugrunde, ein Verfahren und eine Vorrichtung zum Gießen von einer Vielzahl von rasterartig ausgebrachten Topfpflanzen zu schaffen, das die vorstehend beschriebenen Nachteile nicht besitzt, insbesondere das einen geringeren Arbeits- und Zeitaufwand und einen geringen Wasser- und Düngerverbrauch erfordert.

Erfindungsgemäß wird diese Aufgabe dadurch gelöst, daß durch an dem Aufbau angebrachte Bohreinrichtungen für die Topfpflanzen rasterförmig angeordnete Löcher in das Erdreich gebohrt werden, wonach die Topfpflanzen auf dem Aufbau über die Bohrlöcher transportiert, dort positioniert und definiert in die Bohrlöcher abgesetzt werden.

Erfindungsgemäß wird nunmehr ein kombiniertes Verfahren dergestalt vorgeschlagen, das unter Verwendung einer einzigen Einrichtung, nämlich eines Gießwagens, zuerst rasterförmig angeordnete Bohrlöcher gebohrt werden, und dann die Topfpflanzen automatisch in die Bohrlöcher gesetzt werden. In herkömmlicher Weise kann durch nachfolgend bzw. während des Vorfahrens des Gießwagens auch eine gezielte Bewässerung erfolgen.

Da die Bohrlöcher durch an dem Gießwagen angebrachte Einrichtungen gebohrt werden, und damit stets in einer exakten Zuordnung zu den Bewässerungsdüsen stehen, ist eine gezielte Bewässerung der Topfpflanzen möglich, so daß sich neben einer Einsparung von Aufwand und Personal auch eine Wasser- und Düngerkosteneinsparung ergibt.

So kann dadurch z.B. ein sogenannter Punkt-Impuls-Gießwagen verwendet werden, wobei jeweils durch Impulse bzw. eine Kontaktgabe exakt und gezielt Gießwasser in die Töpfe eingespritzt wird.

Von Vorteil ist es, wenn man die Topfpflanzen, die bei dem erfindungsgemäßen Verfahren keine Übertöpfe benötigen, für einen besseren Halt in die Bohrlöcher eindrückt. Dies kann durch entsprechende Einrichtungen erfolgen, die ebenfalls an dem Gießwagen angebracht sind.

Eine Vorrichtung zur Durchführung des Verfahrens kann darin bestehen, daß an dem Aufbau wenigstens eine quer zur Vorschubrichtung des Gießwagens verschiebbare Bohreinrichtung mit mehreren Bohrern für die Topfpflanzen angeordnet ist.

Eine Bohreinrichtung, die zweckmäßigerweise mit mehreren Bohrern versehen ist, wird dabei gezielt gesteuert quer zur Vorschubrichtung taktweise verschoben, wobei eine entsprechende Anzahl von Bohrlöchern in das Erdreich eingebracht wird. Sind auf diese Weise alle Löcher einer Reihe gebohrt, fährt der Gießwagen um einen vorbestimmten Takt weiter und die Löcher der nächsten Reihe werden in gleicher Weise gebohrt.

Wenn die zu bearbeitende Fläche sehr groß ist, bzw. der Gießwagen eine entsprechende Breite besitzt, kann es von Vorteil sein, wenn mehrere Bohreinrichtungen nebeneinander an dem Aufbau angeordnet sind. Auf diese Weise wird eine entsprechende Zeitersparnis erreicht, denn eine Einheit muß nicht die gesamte Breite einer Reihe überstreichen, sondern lediglich einen bestimmten Abschnitt.

In Ausgestaltung der Erfindung kann vorgesehen sein, daß an dem Aufbau in Vorschubrichtung des Gießwagens hinter der oder den Bohreinrichtungen wenigstens eine quer zur Vorschubrichtung verschiebbare Absetzeinrichtung zum gezielten Absetzen der Topfpflanzen in die Bohrlöcher angeordnet ist.

Entsprechend gesteuert, können auf diese Weise Topfpflanzen, die auf beliebige Weise auf dem Aufbau des Gießwagens entsprechend an die vorgewählte Stelle transportiert worden sind, in die Bohrlöcher abgesetzt werden.

Auch hier ist es von Vorteil bei großen Flächen mehrere Absetzeinrichtungen nebeneinander anzuordnen, um eine entsprechende Zeitersparnis zu erreichen.

Selbstverständlich ist es dabei erforderlich, daß das Bohren der Löcher und das Absetzen der Topfpflanzen entsprechend koordiniert erfolgt, um die gewünschte Zeiteinsparung zu erreichen.

In einfacher Weise kann die Absetzeinrichtung auch mit einer Eindrückeinrichtung für die Topfpflanzen in die Bohrlöcher versehen sein.

Eine einfache konstruktive Ausgestaltung für eine Absetzeinrichtung kann darin bestehen, daß sie Verstellglieder für eine vertikale Verstellung und Verschiebeglieder für eine horizontale Verschiebung der Absetzeinrichtung aufweist.

Durch eine derartige Ausgestaltung können die auf dem Gießwagen antransportierten Topfpflanzen aufgenommen, horizontal in gewünschter Weise verschoben und anschließend exakt in die Bohrlöcher abgesenkt werden.

Zum Anheben und Absetzen der Topfpflanzen sind verschiedene Greifeinrichtungen möglich. In einfacher Weise kann eine Greifeinrichtung mehrere die Topfpflanzen wenigstens teilweise umfassende Aussparungen besitzen.

Auf diese Weise können mehrere Topfpflanzen in einem Arbeitsgang aufgenommen, horizontal verschoben und gezielt abgesetzt werden.

Von Vorteil ist es dabei, wenn auch die Greifeinrichtung mit einer Andrückeinrichtung für abgesetzte Topfpflanzen versehen ist.

Damit kann die gleiche Einrichtung auch zum Andrücken der Topfpflanzen verwendet werden.

Eine einfache konstruktive Ausgestaltung hierfür besteht darin, daß die Andrückeinrichtung horizontale Arme aufweist, die mit Abstand über der Greifeinrichtung angeordnet sind, die bei einer Schwenkbewegung der Greifeinrichtung und/oder vertikalen, nach unten gerichteten Verschiebung der vertikalen Verstellglieder die Topfpflanzen in das Erdreich bzw. tiefer in die Löcher drücken.

Die horizontalen Arme drücken dabei von oben auf den Topfrand und positionieren diesen damit sicher und spielfrei in dem jeweiligen Bohrloch.

Als Transporteinrichtung zum Anliefern der mit der Absetzeinrichtung in die Bohrlöcher abzusetzenden Topfpflanzen sind die verschiedensten Transporteinrichtungen denkbar.

In einfacher Weise kann hierfür ein Transportband verwendet werden, das quer zur Vorschubrichtung des Gießwagens an dessen Aufbau angeordnet ist und das die Topfpflanzen entsprechend quer transportiert. Der Transport kann dabei ebenfalls taktweise erfolgen.

Nachfolgend ist ein Ausführungsbeispiel der Erfindung anhand der Zeichnung prinzipmäßig dargestellt.

Es zeigt:

Fig. 1    eine Seitenansicht des erfindungsgemäßen Gießwagens;

Fig. 2    eine Draufsicht auf den erfindungsgemäßen Gießwagen;

Fig. 3    in vergrößerter Darstellung eine Seitenansicht des Gießwagens;

Fig. 4    eine vergrößerte Draufsicht auf eine Greifeinrichtung.

Der Gießwagen besitzt einen brückenartigen Aufbau 1 mit seitlichen Auslegern 2 und 3. Er ist mit vier Rädern 4 versehen, die auf zwei Fahrschienen 5 rollen. Der Gießwagen 1 ist grundsätzlich von bekannter Bauart, weshalb nachfolgend nur auf die erfindungsgemäßen Teile näher eingegangen wird. Über einen nicht näher dargestellten Antrieb läßt sich der Gießwagen taktweise durch entsprechende Impulsgeber 28 an der Fahrschiene gesteuert auf den Schienen 5 verfahren.

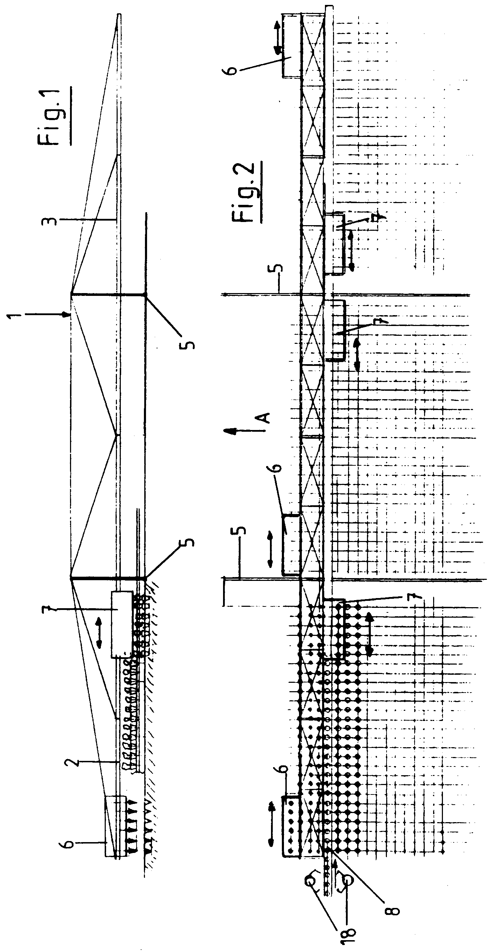

Auf der in Fahrtrichtung gesehen vorderen Seite des Gießwagens (siehe Pfeil A in der Fig. 2) sind an dem Aufbau des Gießwagens drei Bohreinrichtungen 6 angeordnet. Aus der Fig. 2 ist ersichtlich, daß jeweils eine Bohreinrichtung 6 an einem frei auskragenden Ausleger und eine mittlere Bohreinrichtung 6 in dem Bereich des Gießwagens zwischen den beiden Gleisen 5 angeordnet ist. Zur Vereinfachung sind in der Fig. 1 die mittlere und die rechte Bohreinrichtung, ebenso wie übrige Teile des erfindungsgemäßen Gießwagens nicht dargestellt. In nicht näher dargestellter Weise sind die Bohreinrichtungen 6 in horizontaler Richtung quer zur Vorschubrichtung des Gießwagens verfahrbar, wobei die beiden äußeren Bohreinrichtungen den Bereich vom äußeren Ende eines Auslegers bis zum mittleren Bereich, d.h. bis zu den Schienen 5 überstreichen, während die mittlere Bohreinrichtung 6 den Bereich zwischen den beiden Schienen überstreicht.

Auf der hinteren Seite des Aufbaues 1 und auf den beiden Auslegern 2 und 3 ist jeweils eine Absetzeinrichtung 7 angeordnet, wobei in gleicher Weise wie die Bohreinrichtungen 6 die beiden äußeren auf den Auslegern 2 und 3 angeordneten Absetzeinrichtungen 7 in horizontaler Richtung quer zur Vorschubrichtung des Gießwagens von außen nach innen und von innen nach außen bis zu den Gleisen 5 verschiebbar sind, während die mittlere Absetzeinrichtung den Bereich zwischen den beiden Schienen 5 überstreicht.

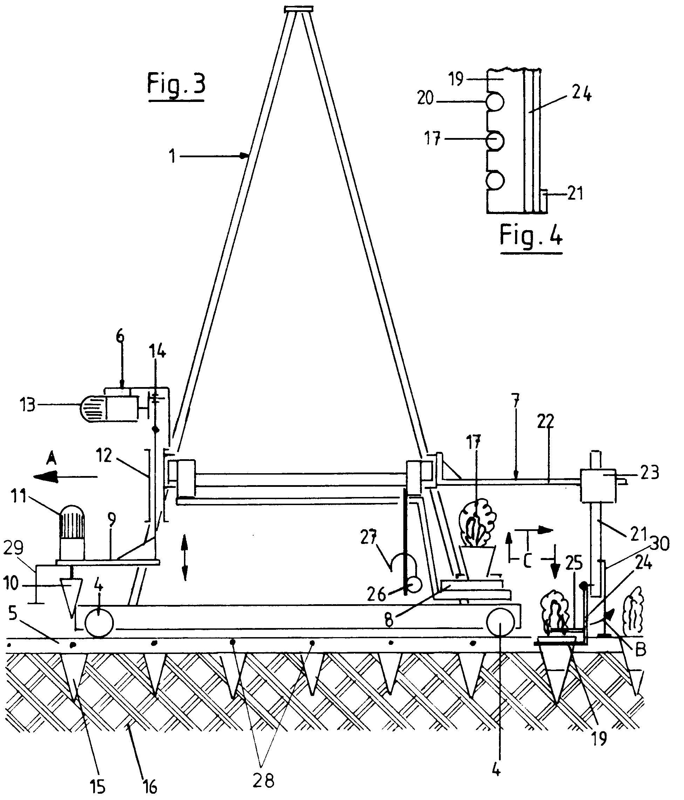

Zusätzlich ist auf dem Aufbau des Gießwagens noch eine Transporteinrichtung in Form eines sich über die ganze Breite des Aufbaues und der Ausleger erstreckenden Transportbandes 8 angeordnet. Aus den Fig. 3 und 4 sind der Aufbau und die Wirkungsweise der Bohreinrichtung 6, der Absetzeinrichtung 7 und des Transportbandes 8 näher ersichtlich. Jede Bohreinrichtung 6 weist eine horizontale Plattform 9 auf, auf der nebeneinander angeordnet mehrere Bohrmaschinen 11 mit Bohrern 10 angeordnet sind. Bei dem dargestellten Ausführungsbeispiel sind pro Bohreinheit 6 sechs nebeneinander angeordnete Bohrer 10 mit Bohrmaschinen 11 vorgesehen, wobei diese Zahl jedoch lediglich beispielsweise ist.

Die Plattform 9 ist über eine Führungseinrichtung 12 und einem Antriebsmotor 13 mit einem Getriebe 14, z.B. einem Kurbelantrieb, höhenverstellbar. Zum Bohren von Löcher 15 in das Erdreich 16 wird die Plattform 9 entsprechend weit abgesenkt, so daß die Bohrer 10 bei Betätigung der Bohrmaschine 11 in entsprechender Weise Löcher in das Erdreich bohren können. Anschließend wird die Plattform 9 wieder angehoben, die Bohreinrichtung 6 horizontal quer zur Vorschubrichtung des Gießwagens um einen Takt verschoben, wonach die nächsten Löcher der gleichen Reihe gebohrt werden, und zwar bis alle Löcher einer Reihe gebohrt sind.

Die Bohreinheit ist mit einer automatischen Tiefenabtastung 29 ausgerüstet, wegen Unebenheiten des Bodens, bezogen zur Schienenanlage 5 bzw. Gesamt-Gießanlage. Auf diese Weise werden die Löcher stets mit der richtigen Tiefe gebohrt.

Nach einer Anfangsphase, die im vorliegenden Falle sieben Reihen beträgt (siehe Fig. 3) und die von den jeweiligen die Breite des Aufbaues des Gießwagens abhängig ist, werden gleichzeitig mit dem Bohren der Löcher der siebten Reihe von der Absetzeinrichtung 7 aus Topfpflanzen 17 in die Bohrlöcher 15 der ersten Reihe eingesetzt. Selbstverständlich ist der Abstand von sieben Reihen ebenfalls nur beispielsweise in Abhängigkeit von der Breite des Gießwagens genannt.

Das Absetzen der Topfpflanzen 17 erfolgt auf folgende Weise:

Ein oder zwei seitlich neben dem Gießwagen angeordnete Bedienungspersonen 18 setzen Topfpflanzen 17 auf das Transportband 8, von welchem aus diese taktweise quer zur Vorschubrichtung des Gießwagens verschoben werden. Jeweils über einem leeren Bohrloch 15 auf dem Transportband 8 positionierte Topfpflanzen 17 werden von einer Greifeinrichtung 19, die mit Aussparungen 20 versehen ist, erfaßt. In vorteilhafter Weise wird man zur optimalen Koordinierung mit der Bohreinrichtung 6 ebenfalls pro Absetzeinrichtung 7 eine Greifeinrichtung 19 mit jeweils sechs Aussparungen 20 vorsehen, womit jeweils in einem Arbeitsgang sechs Topfpflanzen in die Bohrlöcher 15 eingebracht werden können. Die Greifeinrichtung 19, die im wesentlichen eine horizontale Platte mit Aussparungen 20 auf der in Fahrtrichtung bzw. Vorschubrichtung des Gießwagens liegenden Seite aufweist, ist an einem oder mehreren vertikalen Verstellgliedern 21 angelenkt, die an einem oder an mehreren horizontalen Verschiebegliedern, die als horizontale Ausleger 22 ausgebildet sind, in horizontaler Richtung, und zwar parallel zur Vorschubrichtung des Gießwagens verschiebbar sind. Die Verschiebung erfolgt durch eine nicht näher dargestellte Antriebseinheit 23, die auch eine Antriebseinheit für die vertikale Verstellung des oder der Verstellglieder 21 beinhaltet. Die Greifeinrichtung 19 ist über einen vertikalen Abschnitt 24 gelenkig mit der oder den vertikalen Verstellgliedern 21 verbunden, wodurch neben einer Höhenverstellbarkeit gleichzeitig auch noch eine Schwenkbewegung möglich ist (siehe Pfeil B in der Fig. 3).

Zum Aufnehmen und zum Absetzen von jeweils sechs Topfpflanzen 17 werden die in der Fig. 3 durch die Pfeile C dargestellten Bewegungen vorgenommen. Diese Bewegungen werden durch eine koordinierte Verschiebung des oder der vertikalen Verstellglieder 21 in horizontaler Richtung entlang des Auslegers 22 und in vertikaler Richtung durch eine entsprechende Höhenverstellung des oder der vertikalen Verstellglieder 21 über die Antriebseinrichtung 23 möglich.

In üblicher Weise besitzen die konisch zulaufende Töpfe von Topfpflanzen 17 im oberen Bereich einen Rand mit einer stufenartig sich erweiternden Durchmesservergrößerung. Die Aussparungen 20 in der Greifeinrichtung 19 sind nun so groß gewählt, daß die Töpfe der Topfpflanzen 17 mit ihren Rändern an den Umfangsrändern der Aussparungen 20 aufsitzen, d.h sie passen nur im Bereich des geringeren Durchmessers unter dem Rand in die Aussparungen und sitzen beim Anheben auf den Umfangsrändern auf.

Sind die Topfpflanzen 17 mit ihren Töpfen in den Aussparungen aufgenommen, wird die Greifeinrichtung 19 über eine entsprechende Höhenverstellung des oder der vertikalen Verstellglieder 21 leicht angehoben, anschließend erfolgt ein Verfahren in Pfeilrichtung und ein exaktes Absetzen in jeweils ein Loch 15.

Die Absetzeinrichtung ist mit einer automatischen Tiefenabtastung 30 ausgerüstet, wegen Unebenheiten des Bodens, bezogen zur Schienenanlage 5 bzw. Gesamt-Gießanlage.

Wie aus der Fig. 3 weiterhin ersichtlich ist, ist mit geringem Abstand über der Greifeinrichtung 19 für jede abzusetzende Topfpflanze ein horizontaler Arm 25 vorgesehen. Der Abstand des horizontalen Armes 25 von der Greifeinrichtung 19 ist so gewählt, daß er sich geringfügig über dem oberen Ende eines Topfes befindet. Wird nun nach dem Absetzen der Topfpflanzen 17 in den Löchern 15 die Greifeinrichtung 19 in Pfeilrichtung B aufgrund der gelenkigen Verbindung mit der oder den vertikalen Verstellgliedern 21 weggeschwenkt, wobei im Bedarfsfalle gegebenenfalls auch noch gleichzeitig eine weitere nach unten gerichtete Verstellung vorgenommen werden kann, so drücken die horizontalen Arme 25 jeweils auf den oberen Rand eines Topfes und passen diesen damit fest und spielfrei in ein Bohrloch 15 ein. Anschließend kann die Greifeinrichtung, die ja aufgrund der Schwenkbewegung von den Topfpflanzen 17 freigekommen ist, d.h. wodurch die Topfpflanzen aus den Aussparungen 20 der Greifeinrichtung 19 gekommen sind, wieder nach oben bewegt werden. Nach einer Querverschiebung in horizontaler Richtung um einen weiteren Takt, d.h. um weitere sechs Topfpflanzen 17, können die nächsten sechs Topfpflanzen in der vorstehend beschriebenen Weise aufgenommen und in die Bohrlöcher 15 abgesetzt werden.

An dem Gießwagen 1 ist in üblicher Weise auch eine Zuleitung 26 zur Zufuhr von Wasser und gegebenenfalls auch von flüssigem Dünger angeordnet (siehe Fig. 3). Von der Zuleitung 26 aus zweigen entsprechend der Anzahl der gebohrten Löcher 15 und der darin sich befindenden Topfpflanzen 17 für jede Reihe eine entsprechende Anzahl von Bewässerungsdüsen 27 ab.

Wie aus der Fig. 3 weiterhin ersichtlich ist, befinden sich die Öffnungen der Bewässerungsdüsen 27 jeweils exakt über jedem Bohrloch 15 einer Reihe. Auf diese Weise kann jede Topfpflanze 17 jeder Reihe exakt und genau bewässert werden.

Ebenso wie beim Bohren von Löchern 15 und beim Absetzen von Topfpflanzen 17 über die Absetzeinrichtung 7 verfährt auch beim anschließenden Gießen der Gießwagen taktweise in Pfeilrichtung A, d.h. jeweils um eine Reihe vor, wodurch alle Topfpflanzen 17 wunschgemäß und gezielt bewässert werden können.

Da - wie ersichtlich - eine exakte Zuordnung der Bohreinrichtungen 6, der Absetzeinrichtungen 7 und der Bewässerungsdüsen 27 über die Impulsgeber 28 an den Fahrschienen gegeben ist, ist auch gewährleistet, daß nach einem Einbringen der Topfpflanzen 17 in die Bohrlöcher 15 nachfolgend stets eine gezielte Bewässerung möglich ist.

Durch entsprechende Impulsgeber 28 und Steuereinrichtungen (nicht dargestellt) kann dabei sogar eine Bewässerung dergestalt erfolgen, daß Topfpflanzen 17 in verschiedenen Reihen auch unterschiedliche Wassermengen erhalten. Bei einer entsprechenden Steuerung der Bewässerungsdüsen können im Bedarfsfalle auch innerhalb einer Reihe unterschiedliche Wassermengen auf die Topfpflanzen aufgebracht werden.

Wie ersichtlich, läßt sich das erfindungsgemäße Verfahren und die erfindungsgemäße Vorrichtung in einem sehr weiten Bereich und sehr spezifisch in Abhängigkeit von den gestellten Anforderungen einsetzen.

**Patentansprüche**

1. Verfahren zum Gießen von einer Vielzahl von rasterartig angeordneten Topfpflanzen, wobei ein taktweise verfahrbarer Gießwagen mit brückenartigem Aufbau über an dem Aufbau angeordnete Bewässerungsdüsen die Pflanzen gezielt wässert,
   **dadurch gekennzeichnet,** daß durch an dem Aufbau (1,2,3) angebrachte Bohreinrichtungen (6) für die Topfpflanzen (17) rasterförmig angeordnete Löcher (15) in das Erdreich gebohrt werden, wonach die Topfpflanzen (17) auf dem Aufbau (1,2, 3) über die Bohrlöcher (15) transportiert, dort positioniert und definiert in die Bohrlöcher (15) abgesetzt werden.

2. Verfahren nach Anspruch 1,
   **dadurch gekennzeichnet,** daß die Topfpflanzen (17) in die Bohrlöcher (15) eingedrückt werden.

3. Vorrichtung zur Durchführung des Verfahrens nach Anspruch 1 oder 2 mit einem rasterförmig verfahrbaren Gießwagen, an dessen brückenartigen Aufbau Bewässerungsdüsen angeordnet sind,
   **dadurch gekennzeichnet,** daß an dem Aufbau (1,2,3) wenigstens eine quer zur Vorschubrichtung des Gießwagens verschiebbare Bohreinrichtung (6) mit mehreren Bohrern (10) für die Topfpflanzen (17) angeordnet ist.

4. Vorrichtung nach Anspruch 3,
   **dadurch gekennzeichnet,** daß mehrere Bohreinrichtungen (6) nebeneinander an dem Aufbau (1,2,3) angeordnet sind.

5. Vorrichtung nach Anspruch 3 oder 4, **dadurch gekennzeichnet,** daß an dem Aufbau (1,2,3) in Vorschubrichtung des Gießwagens hinter der oder den Bohreinrichtungen (6) wenigstens eine quer zur Vorschubrichtung verschiebbare Absetzeinrichtung (7) zum gezielten Absetzen der Topfpflanzen (17) in die Bohrlöcher (15) angeordnet ist.

6. Vorrichtung nach Anspruch 5, **dadurch gekennzeichnet,** daß mehrere Absetzeinrichtungen (7) nebeneinander angeordnet sind.

7. Vorrichtung nach Anspruch 5 oder 6, **dadurch gekennzeichnet,** daß die Absetzeinrichtung (7) mit einer Eindrückeinrichtung (25) für die Topfpflanzen (17) in die Bohrlöcher (15) versehen ist.

8. Vorrichtung nach Anspruch 6 oder 7, **dadurch gekennzeichnet,** daß die Absetzeinrichtung (7) Verstellglieder (21) für eine vertikale Verstellung und Verschiebeglieder (22) für eine horizontale Verschiebung der Absetzeinrichtung aufweist.

9. Vorrichtung nach einem der Ansprüche 6, 7 oder 8, **dadurch gekennzeichnet,** daß die vertikalen Verstellglieder (21) wenigstens eine Greifeinrichtung (19) aufweisen, und daß die Verstellglieder (21) an einem horizontalen Ausleger (22) verschiebbar sind.

10. Vorrichtung nach Anspruch 9, **dadurch gekennzeichnet,** daß die Greifeinrichtung (19) mehrere die Topfpflanzen (17) wenigstens teilweise umfassende Aussparungen (20) besitzt.

11. Vorrichtung nach Anspruch 9 oder 10, **dadurch gekennzeichnet,** daß die Greifeinrichtung (19) mit einer Andrückeinrichtung (25) für abgesetzte Topfpflanzen (17) versehen ist, die horizontale Arme (25) aufweist, die mit Abstand über der Greifeinrichtung (19) angeordnet sind, die bei einer Schwenkbewegung der Greifeinrichtung (19) und/oder vertikalen, nach unten gerichteten Verschiebung der vertikalen Verstellglieder (21) die Topfpflanzen (17) in das Erdreich drücken.

12. Vorrichtung nach einem der Ansprüche 3 bis 11, **dadurch gekennzeichnet,** daß an dem Aufbau (1,2,3) des Gießwagens eine quer zur Vorschubrichtung des Gießwagens angeordnete Transporteinrichtung, z.B. ein Transportband (8) für einen Quertransport der Topfpflanzen (17) angeordnet ist.

13. Vorrichtung nach einem der Ansprüche 2 bis 12, **dadurch gekennzeichnet,** daß die Bohreinrichtung (6) und/oder die Absetzeinrichtung (7) eine automatische Tiefenabtastung (29,30) aufweisen.

Fig.1

Fig.2

EP 0 472 090 A2

Fig.3

Fig.4